# EUROPÄISCHE PATENTANMELDUNG

(11) **EP 1 063 747 A1**
(43) Veröffentlichungstag der Anmeldung: **27.12.2000**
(21) Anmeldenummer: 00112480.9
(22) Anmeldetag: 13.06.2000
(51) Int. Cl.: H02G 3/04, H01B 3/50

(54) **Schutzummantelung**

(30) Priorität: 23.06.1999 DE 29910987 U
(71) Anmelder: Verta AG, 9004 St. Gallen (CH)
(72) Erfinder: Lindner, Michael, 83026 Rosenheim (DE)
(74) Vertreter: Patentanwälte Schaad, Balass, Menzl & Partner AG

(57) **Zusammenfassung**

Die Schutzummantelung für langestreckte, biegsame Gegenstände, wie z.B. Kabel, weist zwei Vliese (12, 14) auf, die mittels eines SpinnfaservliesKlebstoffes (13) miteinander verbunden sind. Zur Fixierung der Schutzummantelung auf dem zu schützenden Gegenstand dient eine auf dem einen Vlies (14) vorgesehene Klebeschicht (16), die mittels eines ablösbaren Schutzpapieres (17) abgedeckt ist.

## Beschreibung

Die Erfindung betrifft eine Schutzummantelung für langgestreckte biegsame Gegenstände, insbesondere Kabel.

Langgestreckte biegsame Gegenstände wie beispielsweise Kabel, Kabelbäume, Litzen, Leitungen, Füllrohre von Bowdenzügen werden z.B. in Flugzeugen, Schiffen, Kraftfahrzeugen, Waschmaschinen, Kompressoren, Schaltschränken und allgemein in rotierenden und/oder vibrierenden Maschinen oder Anlagen verlegt und während des Betriebes in Schwingungen versetzt. Durch die Schwingungen werden zum einen unerwünschte Geräusche erzeugt. Zum anderen besteht die Gefahr, daß die langgestreckten biegsamen Gegenstände - beispielsweise durch scharfe Kanten - beschädigt werden.

Aus der DE 295 10 907 U1 ist eine Schutzummantelung der eingangs genannten Art bekannt, die aus einem Filz- oder Schaumstoffstreifen mit einem Klebstoffauftrag auf der Innenseite und einer Glattschicht auf der Außenseite besteht, wobei die Glattschicht eine Vlies-, Gewebe-, Gewirke-, Gestrick- oder Folienbahn aus einem abriebfesten Material sein kann.

Aufgabe der Erfindung ist es, eine Schutzummantelung der eingangs genannten Art zu schaffen, die bei möglichst einfacher Herstellung und Verarbeitung eine hohe Abriebfestigkeit aufweist und die insbesondere gute Schalldämmungseigenschaften besitzt sowie leicht montierbar ist.

Die Lösung dieser Aufgabe erfolgt durch die Merkmale des Anspruchs 1 und insbesondere dadurch, daß die Schutzummantelung einen mehrschichtigen Aufbau aus zumindest zwei miteinander verbundenen Vliesen aufweist.

Erfindungsgemäß kommt somit kein Filzmaterial, sondern Vliesmaterial zum Einsatz. Es wurde festgestellt, daß durch die erfindungsgemäße Verbindung von wenigstens zwei Vliesen eine Schutzummantelung hergestellt werden kann, die eine überaus hohe Abriebfestigkeit und Scheuerfestigkeit aufweist. Ein Vorteil der erfindungsgemäßen Verwendung von Vliesen für jede der die Schutzummantelung bildenden Schichten besteht darin, daß Vliese mit guten Flexibilitätseigenschaften hergestellt werden können. Die Vliese können starken Verformungen, wie sie zur Bildung von schlauch- oder hüllenartigen Gebilden erforderlich sind - ausgesetzt werden, ohne daß die Gefahr der Zerstörung des Vliesaufbaus besteht. Dies ist bei gewebten oder in sich fest verbundenen Stoffen nicht der Fall. Auch Gewirke weisen einen zu starren Aufbau auf, der dazu führt, daß bei einer Verformung einzelne Fasern frühzeitig reißen und somit der gesamte Gewirkeaufbau zerstört wird.

Es hat sich herausgestellt, daß die Flexibilität der Vliese und damit die dem erfindungsgemäßen Aufbau aus mehreren flexiblen Vlies-Schichten innewohnende Beweglichkeit eine erheblich verbesserte Abriebfestigkeit zur Folge hat.

Tests haben ergeben, daß das erfindungsgemäße Material eine um ein Vielfaches bessere Abriebfestigkeit aufweist als eine Schutzummantelung, die lediglich aus einem einzigen Vlies besteht. Auch die Abrieb- bzw. Scheuerfestigkeit des dem eingangs erwähnten Stand der Technik entsprechenden Materials wird mit dem erfindungsgemäßen Verbundmaterial um ein Vielfaches übertroffen. Außerdem hat sich herausgestellt, daß die erfindungsgemäße Schutzummantelung eine sehr gute Geräuschdämmung bewirkt, d.h. die erfindungsgemäße Schutzummantelung ist nicht nur vor Durchscheuern geschützt, sondern sie verhindert gleichzeitig die Entstehung störender Geräusche in der Umgebung, in welcher der jeweils zu schützende Gegenstand verlegt ist.

Gemäß einem bevorzugten Ausführungsbeispiel der Erfindung sind die Vliese derart miteinander verbunden, daß sie gegeneinander verschiebbar sind. Von außen auf die Schutzummantelung aufgebrachte Kräfte können dadurch Relativbewegungen der Vliese erzeugen, wobei derartige Bewegungen Kräfte in dem Mehrschicht-Aufbau aufnehmen können. Der Abrieb wird hierdurch reduziert. Untersuchungen haben ergeben, daß sich durch den lockeren - für eine innere Beweglichkeit des erfindungsgemäßen Mehrschicht-Aufbaus sorgenden - und dennoch gleichzeitig stabilen Verbund von zumindest zwei flexiblen Vliesen beim Abrieb an einer angreifenden Kante ein flauschartiges Gebilde aufbaut, welches nur sehr langsam durch die Kante weggeschoben werden kann. Ein Durchrieb der Schutzummantelung wird auf diese Weise verhindert. Bei einem Vergleichsaufbau gleicher Dicke aus einem Einzelvlies tritt dieser überraschende Effekt nicht auf, d.h. lediglich der erfindungsgemäße Mehrschicht-Aufbau aus zumindest zwei miteinander verbundenen Vliesen besitzt eine unerwartet hohe Abriebstabilität.

Die Verschiebbarkeit der Vliese kann dadurch realisiert werden, daß die Vliese bereichsweise fest miteinander verbunden sind und bereichsweise lose aufeinander liegen.

Eine derartige Verbindungsart, die es ermöglicht, die miteinander verbundenen Vliese bereichsweise gegeneinander zu verschieben, kann beispielsweise durch Verwenden eines Klebstoffes in Form eines Spinnfaservlieses als Verbindungsmedium zwischen den beiden Schichten realisiert werden. Ein derartiges Spinnfaservlies ist als auf Vorratsrollen gewickeltes, bahnförmiges Ausgangsmaterial erhältlich, das in einer geeigneten Herstellungsmaschine zwischen zwei Vliesschichten geführt werden kann. Der Klebstoff ist dabei bevorzugt als thermoaktivierbarer Klebstoff vorgesehen, d.h. der im bahnförmigen Zustand des Spinnfaservlieses noch kalte Klebstoff wird - z.B. durch beheizbare Preßwalzen - nach dem Einbringen zwischen die Vliesschichten erwärmt und auf diese Weise aktiviert.

Während die vorstehend erläuterte Ausführung zwar die bevorzugte Variante darstellt, ist es erfindungsgemäß jedoch ebenfalls möglich, die Vliesschichten vollflächig miteinander zu verbinden. Auch hierdurch lassen sich Schutzummantelungen mit sehr guten Abriebfestigkeiten erzielen. Zur Herstellung einer vollflächigen Verbindung können z.B. als bahnförmiges Ausgangsmaterial erhältliche, einen thermoaktivierbaren Klebstoff umfassende Schichten zwischen die jeweiligen Vlies schichten geführt werden.

Gemäß einer weiteren bevorzugten Ausführungsform der Erfindung ist zumindest ein Vlies ein Wirrvlies. Es wurde ebenfalls festgestellt, daß die Faserlage in einem Vlies die Vliesstoff-Festigkeit mitbestimmt, und daß beispielsweise Quer- und Kreuzvliese weitaus weniger stabil als Wirrvliese sind, in denen es keine bevorzugte Faserausrichtung gibt und die sich als besonders geeignet für Schutzummantelungen herausgestellt haben.

Gemäß einer weiteren bevorzugten Ausführungsform der Erfindung verwendete Nadelvliese haben den Vorteil, daß deren flammenhemmende Ausrüstung zu keiner Verfestigung führt, d.h. die Flexibilitätseigenschaften werden nicht beeinträchtigt. Auch Wirrvliese können genadelt und so auf mechanische Weise verfestigt werden. Bei anderen Maßnahmen zur Verfestigung wie z.B. beim Nähen und bei chemischen Behandlungen ist von Nachteil, daß sich die innere Beweglichkeit des Mehrschicht-Aufbaus verschlechtert.

Gemäß einer weiteren bevorzugten Ausführungsform der Erfindung ist zumindest ein Vlies aus synthetischen Fasern hergestellt. Bevorzugt trifft dies auf alle Vliese zu, wobei in einer besonders bevorzugten Variante alle Vliese aus dem gleichen Ausgangsmaterial hergestellt sind. Bei Verwendung des gleichen Ausgangsmaterials für die Vliese wird die Herstellung der Schutzummantelung vereinfacht und kostengünstiger. Synthetikfasern stellen ein kostengünstiges Ausgangsmaterial dar, das zudem problemlos brandgeschützt ausgerüstet werden kann.

In einer bevorzugten Variante ist das bzw. jedes Vlies aus mehreren verschiedenen Ausgangsmaterialien hergestellt. Die gleichzeitige Verwendung von mehreren verschiedenen Stoffen zur Herstellung des Vlieses erhöht die Stabilität und die Abriebfestigkeit des Vlieses im Vergleich zu einem aus lediglich einem einzigen Material hergestellten Vlies erheblich, wie Untersuchungen gezeigt haben. Durch eine besonders bevorzugte Zusammensetzung, die Polyester, Viskose und Polypropylen umfaßt, können erfindungsgemäß überaus abriebfeste Vliese und somit äußerst dauerhafte und stabile Schutzummantelungen hergestellt werden.

Gemäß einer weiteren bevorzugten Ausführungsform der Erfindung ist ein Vlies außenseitig, insbesondere vollflächig, mit einer Klebeschicht versehen. Auf diese Weise kann die Schutzummantelung auf einfache Weise an dem jeweils zu schützenden Gegenstand fixiert werden, wodurch das Verlegen erheblich vereinfacht wird.

Bevorzugt wird als Klebstoff ein modifiziertes Acrylat vorgesehen, welches lösungsmittelbasierend und somit feuchtigkeitsbeständig ist. Hierdurch kann die Schutzummantelung problemlos in Feuchträumen wie beispielsweise im Bereich von Türen oder der Heckklappe von Kraftfahrzeugen eingesetzt werden. Auch ein normales Acrylat kann erfindungsgemäß als Klebstoff verwendet werden.

Gemäß einer bevorzugten Variante der Erfindung kann in einem VorBenutzungszustand die Klebeschicht mit einer geritzten Schutzschicht aus Papier bedeckt sein, die vor der Montage auf einfache Weise abgelöst werden kann.

Gemäß einer weiteren bevorzugten Ausführungsform der Erfindung ist die Schutzummantelung streifenförmig ausgebildet und durch Längsumschlag in eine schlauch- oder hüllenartige Form bringbar. Auf diese Weise wird durch die Erfindung eine einfache und schnelle Längsmontage der Schutzummantelung auf dem jeweiligen langgestreckten Gegenstand ermöglicht. Im Gegensatz zu einer beispielsweise schrauben- oder helixartigen Umwicklung des Gegenstandes mit einer als Wickelband vorliegenden Schutzummantelung wird bei der Ausführung mit Längsumschlag eine erhebliche Materialeinsparung erzielt. Grundsätzlich ist aber die erfindungsgemäße Schutzummantelung auch in Form eines Wickelbandes in vorteilhafter Weise verwendbar.

Ein weiterer Vorteil der Längsumschlag-Variante besteht darin, daß die Schutzummantelung - in jeder für die Praxis erforderlichen Breite - als Quasi-Endlosmaterial auf Rollen gelagert werden kann und zur Montage einfach auf die erforderliche Länge geschnitten zu werden braucht, wodurch der Materialverbrauch minimiert wird.

Dabei kann die Schutzummantelung in Abhängigkeit von dem jeweils zu schützenden Gegenstand derart dimensioniert sein, daß die Randbereiche der Schutzummantelung im auf dem Gegenstand angeordneten Zustand einander überlappen, wodurch der Gegenstand optimal geschützt ist. Wenn eine außenseitige Klebeschicht vorgesehen ist, ermöglicht diese nicht nur die Fixierung der Schutzummantelung auf dem Gegenstand, sondern auch ein die Montage erleichterndes Zusammenkleben der Randbereiche im Überlappungsbereich.

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. In dieser zeigt:
- Fig. 1: eine Ausführungsform einer erfindungsgemäßen Schutzummantelung in einem flächigen Zustand, und
- Fig. 2: eine Schutzummantelung gemäß der Erfindung um einen zu schützenden Gegenstand gelegt.

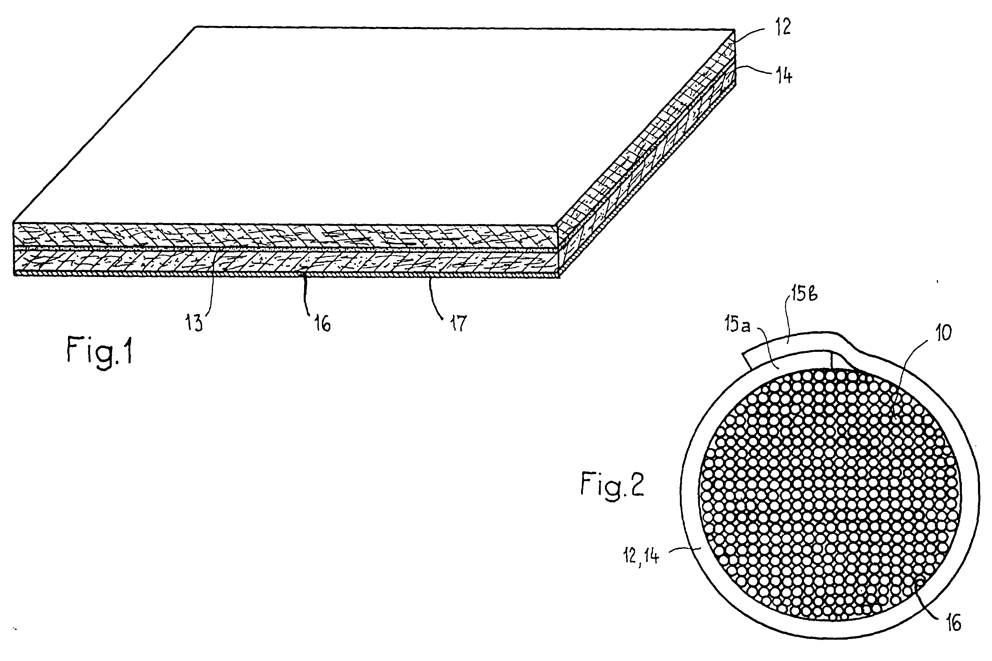

Fig. 1 zeigt eine Ausführungsform einer erfindungsgemäßen Schutzummantelung, bevor diese in eine schlauch- oder hüllenartige Form gebracht wird. Dargestellt ist ein Abschnitt eines bahn- oder bandförmigen Endlosstreifens, der in jeder für die Praxis erforderlichen Breite hergestellt und nach erfolgter Herstellung z.B. auf Rollen gelagert werden kann.

Die Schutzummantelung umfaßt zwei Vliesschichten, wobei die Vliese 12, 14 bereichsweise miteinander derart verklebt sind, daß sie gegeneinander verschoben werden können. Hierzu ist bei der Herstellung des dargestellten Aufbaus ein Spinnfaservlies-Klebstoff 13 zwischen die Vliese 12, 14 gebracht worden. Durch eine derartige Struktur des Verbindungsmediums 13 wird nicht nur eine vorteilhafte innere Beweglichkeit des Schicht-Aufbaus geschaffen, sondern außerdem eine vorteilhafte Gewichtsreduzierung erzielt, welche die brandhemmenden Eigenschaften des erfindungsgemäßen Materials nicht negativ beeinflußt. Grundsätzlich können die Vliese 12, 14 erfindungsgemäß aber auch vollflächig miteinander verklebt werden.

Die Vliese 12, 14 sind jeweils in Form eines Wirrvlieses vorgesehen und aus dem gleichen Ausgangsmaterial hergestellt, welches eine Zusammensetzung aus Polyester, Viskose und Polypropylen ist. Die Vliese 12, 14 können grundsätzlich ein Flächengewicht im Bereich von 80 bis 200 g/m² aufweisen. Bevorzugt liegt dieser Wert im Bereich von 120 bis 150 g/m².

Das im montierten Zustand dem zu schützenden Gegenstand zugewandte Vlies 14 ist mit einer Klebeschicht 16 versehen, die dazu dient, die Schutzummantelung auf dem Gegenstand 10 zu fixieren, wie es in Fig. 2 dargestellt ist. Für die Klebeschicht 16 wird bevorzugt ein lösungsmittelbasierendes und somit feuchtigkeitsbeständiges Acrylat verwendet. Vorzugsweise wird ein modifiziertes Acrylat vorgesehen. Die Klebeschicht 16 kann bei der Herstellung der Schutzummantelung z.B. in Form eines bahnförmigen Ausgangsmaterials den Vliesen 12, 14 zugeführt werden.

Bei der Herstellung der Schutzummantelung wird die Klebeschicht 16 durch ein Schutzpapier 17 bedeckt, das zur Vereinfachung seiner späteren Ablösung mittig längsgeritzt sein kann.

Zur Ummantelung eines zu schützenden Gegenstandes 10, beispielsweise eines Leitungsstrangs oder Kabelbaums in einem Kraftfahrzeug, wird entsprechend Fig. 2 ein auf die erforderliche Länge geschnittener, streifenförmiger Abschnitt durch Längsumschlag zu einer Hülle bzw. zu einem Schlauch geformt und um den Gegenstand 10 herumgelegt. Die zuvor durch Abziehen des Schutzpapiers 17 freigelegte Klebeschicht 16 sorgt für die Fixierung der Schutzummantelung auf dem Gegenstand 10. In Fig. 2 ist das Verbindungsmedium 13 zwischen den Vliesen 12, 14 der Einfachheit halber nicht dargestellt.

In der in Fig. 2 dargestellten Ausführungsform ist die Breite der Schutzummantelung in Abhängigkeit vom Umfang des Gegenstands 10 derart gewählt, daß sich die Randbereiche 15a, 15b überlappen, wobei die Klebeschicht 16 im Überlappungsbereich für eine Fixierung der Randbereiche 15a, 15b aneinander sorgt.

Während der Längsumschlag die bevorzugte Montageart darstellt, ist es grundsätzlich aber auch möglich, die Schutzummantelung in Form eines Wickelbandes vorzusehen und den Gegenstand 10 schrauben- oder helixförmig mit in Abhängigkeit von der jeweiligen Anwendung größerer oder kleinerer Überlappung zu umwickeln.

Zumindest das äußere Vlies 12 kann eingefärbt sein, um auf diese Weise Leitungen, die beispielsweise für sicherheitsrelevante Einrichtungen wie z.B. KFZ-Airbags verwendet werden, zu kennzeichnen.

## Patentansprüche

1. Schutzummantelung für langgestreckte biegsame Gegenstände (10), insbesondere Kabel, mit einem mehrschichtigen Aufbau aus zumindest zwei miteinander verbundenen Vliesen (12, 14).

2. Schutzummantelung nach Anspruch 1,
dadurch gekennzeichnet, daß die Vliese (12, 14) gegeneinander verschiebbar sind.

3. Schutzummantelung nach Anspruch 1 oder 2,
dadurch gekennzeichnet, daß die Vliese (12, 14) bereichsweise fest miteinander verbunden sind und bereichsweise lose aufeinander liegen.

4. Schutzummantelung nach zumindest einem der vorhergehenden Ansprüche,
dadurch gekennzeichnet, daß die Vliese (12, 14) zumindest im wesentlichen vollflächig miteinander verbunden sind.

5. Schutzummantelung nach zumindest einem der vorhergehenden Ansprüche,
dadurch gekennzeichnet, daß die Vliese (12, 14) durch Verkleben miteinander verbunden sind.

6. Schutzummantelung nach zumindest einem der vorhergehenden Ansprüche,
dadurch gekennzeichnet, daß die Vliese (12, 14) mittels eines bevorzugt thermoaktivierbaren Spinnfaservlies-Klebstoffes miteinander verbunden sind, der vorzugsweise in Form eines bahnförmigen Ausgangsmaterials verarbeitbar ist.

7. Schutzummantelung nach zumindest einem der vorhergehenden Ansprüche,
dadurch gekennzeichnet, daß zumindest ein Vlies (12, 14) ein Wirrvlies ist.

8. Schutzummantelung nach zumindest einem der vorhergehenden Ansprüche,
dadurch gekennzeichnet, daß zumindest ein Vlies (12, 14) ein Nadelvlies ist.

9. Schutzummantelung nach zumindest einem der vorhergehenden Ansprüche,
dadurch gekennzeichnet, daß die Vliese (12, 14) aus dem gleichen Ausgangsmaterial hergestellt sind.

10. Schutzummantelung nach zumindest einem der vorhergehenden Ansprüche,
dadurch gekennzeichnet, daß zumindest ein Vlies (12, 14) aus synthetischen Fasern hergestellt ist.

11. Schutzummantelung nach zumindest einem der vorhergehenden Ansprüche,
dadurch gekennzeichnet, daß zumindest ein Vlies (12, 14) aus mehreren verschiedenen Ausgangsmaterialien hergestellt ist.

12. Schutzummantelung nach zumindest einem der vorhergehenden Ansprüche,
dadurch gekennzeichnet, daß zumindest ein Vlies (12, 14) aus einer Zusammensetzung aus Polyester, Viskose und Polypropylen hergestellt ist.

13. Schutzummantelung nach zumindest einem der vorhergehenden Ansprüche,
dadurch gekennzeichnet, daß zumindest ein Vlies (12, 14) einer flammenhemmenden Behandlung unterzogen ist.

14. Schutzummantelung nach zumindest einem der vorhergehenden Ansprüche,
dadurch gekennzeichnet, daß zumindest ein Vlies (12, 14) einer öl-und/oder wasserabweisenden Behandlung unterzogen ist.

15. Schutzummantelung nach zumindest einem der vorhergehenden Ansprüche,
dadurch gekennzeichnet, daß zumindest ein Vlies (12, 14) mit einer farbigen Gestaltung versehen ist.

16. Schutzummantelung nach zumindest einem der vorhergehenden Ansprüche,
dadurch gekennzeichnet, daß sie streifenförmig ausgebildet und durch Längsumschlag in eine schlauch- oder hüllenartige Form bringbar ist.

17. Schutzummantelung nach zumindest einem der vorhergehenden Ansprüche,
dadurch gekennzeichnet, daß sich ihre Randbereiche (15a, 15b) im den zu schützenden Gegenstand (10) umgebenden Zustand überlappen.

18. Schutzummantelung nach zumindest einem der vorhergehenden Ansprüche,
dadurch gekennzeichnet,
daß sie als Wickelband ausgebildet ist, das insbesondere helix- oder schraubenförmig um den zu schützenden Gegenstand (10) wickelbar ist.

19. Schutzummantelung nach zumindest einem der vorhergehenden Ansprüche,
dadurch gekennzeichnet, daß ein Vlies (12, 14) außenseitig, insbesondere vollflächig, mit einer Klebeschicht (16) versehen ist.

20. Schutzummantelung nach zumindest einem der vorhergehenden Ansprüche,
dadurch gekennzeichnet, daß als Klebstoff ein bevorzugt modifiziertes Acrylat vorgesehen ist.

21. Schutzummantelung nach zumindest einem der vorhergehenden Ansprüche,
dadurch gekennzeichnet, daß ein feuchtigkeitsresistenter, insbesondere ein lösungsmittelbasierender, Klebstoff vorgesehen ist.

22. Schutzummantelung nach zumindest einem der vorhergehenden Ansprüche,
dadurch gekennzeichnet, daß in einem Vor-Benutzungszustand die Klebeschicht (16) mit einer insbesondere geritzten Schutzschicht (17) bevorzugt aus Papier bedeckt ist.
